# EUROPEAN PATENT APPLICATION

(11) **EP 1 348 741 A1**
(43) Date of publication of application: **01.10.2003**
(21) Application number: 03006945.4
(22) Date of filing: 26.03.2003
(51) Int. Cl.: C09D 5/00, C08J 7/04

(54) **Coating film having low friction resistance in water and method of reducing the friction of a substrate in water**

(30) Priority: 26.03.2002 JP 2002086752
(71) Applicant: Nippon Paint Co., Ltd., Osaka-shi, Osaka 531-8511 (JP)
(72) Inventor: Yamamori, Naoki, Kyotanabe-shi, Kyoto 610-0351 (JP); Nakamura, Isao, Soraku-gun, Kyoto 619-0200 (JP); Harada, Akio, Nara-shi, Nara 630-8321 (JP)
(74) Representative: Brehm, Hans-Peter

(57) **Abstract**

The present invention has for its object to provide a low friction resistance coating film in water, which is capable of reducing the frictional resistance in the part of a ship or a piping where frictions with fluids such as water may take place.

The present invention is directed to a low friction resistance coating film in water
of which surface has a water contact angle of 0 to 40°.

## Description

### FIELD OF THE INVENTION

The present invention relates to a low friction resistance coating film in water capable of reducing the friction in an aqueous liquid, a method of reducing the friction in water which comprises using said coating film.

### BACKGROUND OF THE ART

The coating film derived from a coating composition, for instance, provides the substrate on which it is formed with new properties such as hydrophilicity and fouling resistance and influences the surface functions, in particular, of the substrate.

In coating the part of a ship or a piping where a friction is generated between it and an aqueous liquid, it is advantageous to use a coating capable of yielding a film attenuating the frictional resistance of the liquid from the standpoint of reducing the fuel cost and energy required for navigations or improving the efficiency of liquid transportation.

Intended to reduce said frictional resistance, Japanese Kokai Publication Hei-11-29725 discloses a coating composition comprising a synthetic polymer, such as an acrylic resin, and undergoing a change in film thickness within a given range and Japanese Kokai Publication Hei-11-29747 discloses a resin composition for coating use which comprises a polyoxyethylene chain-containing polymer having a defined molecular structure. However, the frictional resistance-reducing performance of these compositions is not sufficiently satisfactory.

Japanese Kokai Publication 2001-98007 describes a technology relating to a hydrophilic shaped article formed with a hydrophilic surface layer; Japanese Kokai Publication Hei-11-256077 describes a resin for antifouling coating use which comprises an allylamine resin; and Japanese Kokai Publication Hei-10-259347 describes an antifouling coating composition based on chitin/chitosan.

However, none of these technologies are primarily directed to the reduction of frictional resistance, and actually there is no disclosure about attenuation of frictional resistance.

### OBJECT AND SUMMARY OF THE INVENTION

In the above state of the art, the present invention has for its object to provide a low friction resistance coating film in water, which is capable of reducing the frictional resistance in the part of a ship or a piping where frictions with fluids such as water may take place.

The present invention is directed to a low friction resistance coating film in water
of which surface has a water contact angle of 0 to 40°.

The coating film preferably has a surface roughness of not more than 40 µm.

The present invention is further directed to a method of reducing the friction on a substrate in water
wherein a coating film having a surface with a water contact angle of 0 to 40° is constructed on the substrate surface.

The coating film obtained by the method of reducing the friction on a substrate in water preferably has a surface roughness of not more than 40 µm.

### DETAILED DESCRIPTION OF THE INVENTION

The present invention is now described in detail.

The coating film according to the invention is applied to the surface of a substrate article and, specifically, is formed from a coating composition.

The coating film of the invention is predominantly composed of a polymer. Since the surface of the coating film of the invention should have a water contact angle within the range of 0 to 40°, the resin constituting the coating film is preferably a highly hydrophilic one. Accordingly, it is preferably a polymer having hydrophilic groups within the molecule. As a still more preferred example, there can be mentioned a composition comprising a resin (a synthetic or a natural resin, or a polysaccharide) having one or more kinds of such hydrophilic groups as, for example, polyoxyethylene, hydroxyl, carboxyl, amino, and phosphoric groups and, as admixed therewith, an alkyl silicate.

Among such synthetic resins, the resin having a polyoxyethylene group in its side chain includes the polymer obtainable from a polymerizable monomer having a polyoxyethylene side chain, such as polyoxyethylene (meth)acrylic acid ester monomer, poly (oxyethylene) (meth)acrylate, and so forth. The above polymer preferably contains such a monomer unit within the range of 5 weight % to 98 weight % based on the total monomer. The above upper limit is preferably 95 weight % and the above lower limit is preferably 10 weight %.

The degree of polymerization of said polyoxyethylene group in the monomer is preferably within the range of 2 to 40. If the degree of polymerization is too low, the water contact angle of the coating film can hardly be controlled within 40°. If the degree of polymerization is too high, the solution viscosity of the polymer is increased to interfere with the coating operation and the trouble of cracking due to crystallization may also take place.

The above resin having a polyoxyethylene group in its side chain preferably contains a monomer component not having a polyoxyethylene group within the range of 10 weight % to 95 weight %. The above lower limit is preferably 15 weight % and the above upper limit is preferably 90 weight %.

The above monomer component not containing a polyoxyethylene group is not particularly restricted provided that it contains an unsaturated double bond, thus including, inter alia, ethylenically unsaturated carboxylic acid monomer such as acrylic acid, methacrylic acid, maleic acid, itaconic acid, etc.; ethylenically unsaturated carboxylic acid alkyl ester monomers such as ethyl acrylate, n-butyl acrylate, 2-ethylhexyl acrylate, methyl methacrylate, ethyl methacrylate, n-butyl methacrylate, 2-ethylhexyl methacrylate, etc.; ethylenically unsaturated dicarboxylic acid monoester monomers such as ethyl maleate, butyl maleate, ethyl itaconate, butyl itaconate, etc.; hydroxyl-containing ethylenically unsaturated carboxylic acid alkyl ester monomers such as 2-hydroxyethyl acrylate, 2-hydroxypropyl acrylate, 4-hydroxybutyl acrylate, 2-hydroxyethyl methacrylate, 2-hydroxypropyl methacrylate, 4-hydroxybutyl methacrylate, the reaction product of 2-hydroxyethyl methacrylate with ε-caprolactone, etc.; ethylenically unsaturated carboxylic acid aminoalkyl ester monomers such as aminoethyl acrylate, dimethylaminoethyl acrylate, butylaminoethyl acrylate, etc.; ethylenically unsaturated carboxylic acid aminoalkylamide monomers such as aminoethylacrylamide, dimethylaminomethylmethacrylamide, methylaminopropylmethacrylamide, etc.; other amide group-containing ethylenically unsaturated carboxylic acid monomers such as acrylamide, methacrylamide, N-methylolacrylamide, methoxybutylacrylamide, diacetoneacrylamide, etc.; unsaturated fatty acid glycidyl ester monomers such as glycidyl acrylate, glycidyl methacrylate, etc.; vinyl cyanide monomers such as (meth)acrylonitrile, α-chloroacrylonitrile, etc.; saturated aliphatic carboxylic acid vinyl ester monomers such as vinyl acetate, vinyl propionate, etc.; and styrenic monomers such as styrene, α-methylstyrene, vinyltoluene, and so on.

The resin having -NH₂ as said amino group in a side chain may have an aldehyde coupled to the side chain in the form of an azomethine group through reaction with an aldehyde group-containing compound or may have an unsaturated group-containing compound added to the side chain by Michael reaction. The above azomethine group forms as the side chain primary amino group reacts with the aldehyde group. By providing the resin with this azomethine group, the water-solubility of resin can be decreased. Moreover, because the azomethine group is hydrolyzed in an weakly alkaline environment such as seawater to gradually solubilize the resin and the released aldehyde compound exhibits antifouling activity against attachment of aquatic life, the resin yields a coating film having an excellent antifouling performance.

The aldehyde group-containing compound mentioned above includes aromatic aldehydes such as benzaldehyde, p-n-hexylbenzaldehyde, p-octylbenzaldehyde, p-oleylbenzaldehyde, vanillin, piperonal, cinnamaldehyde, etc.; and saturated or unsaturated aliphatic aldehydes containing 6 or more carbon atoms, such as caproic aldehyde, caprylic aldehyde, capric aldehyde, lauraldehyde, stearaldehyde, oleic aldehyde, etc. Particularly preferred, among these, are benzaldehyde and lauraldehyde. The compound which can be added by Michael reaction includes not only the compounds mentioned above for the monomer component not containing a polyoxyethylene group but also cinnamic acid derivatives and modification products.

The synthetic resin mentioned above can be produced by the known technology, for example by solution polymerization, emulsion polymerization, suspension polymerization, NAD polymerization, or bulk polymerization. In conducting such polymerization reactions, known initiators and emulsifiers can be used where necessary.

The above synthetic resin preferably has a number average molecular weight of not less than 2000. If it is less than 2000, the resin will be deficient in film-forming properties. The more preferred lower limit is 5000.

Where necessary, a functional group for crosslinking may be judiciously introduced into said synthetic resin and by using a crosslinking agent suited to the particular functional group, a three-dimentionally crosslinked coating film which is highly durable can be obtained on curing. The crosslinking agent that can be used as above includes diisocyanate compounds, epoxy compounds, carbodiimide compounds, and aldehyde compounds, among others.

The diisocyanate compound that can be used as the crosslinking agent is not particularly restricted provided that it is a compound having at least two isocyanato groups within the molecule.

The epoxy compound that can be used as the crosslinking agent includes glycidyl ether compounds. The diglycidyl ether compound referred to just above includes but is not limited to trimethylolpropane triglycidyl ether, neopentyl glycol diglycidyl ether, glycerol diglycidyl ether, glycerol triglycidyl ether, glycerol polyglycidyl ether, propylene glycol diglycidyl ether, ethylene glycol diglycidyl ether, diethylene glycol diglycidyl ether, and sorbitol polyglycidyl ether.

For the crosslinking of the synthetic resin, said crosslinking agent is preferably formulated in a proportion of 0.1 weight % to 200 weight % relative to 100 weight % of the resin. If the formulating level is less than 0.1 weight %, the degree of crosslinking tends to be insufficient. If it exceeds 200 weight %, the gelation time tends to be so short that the coating operation may be interfered with. The preferred range is 0.5 to 150 weight %.

The resin having an amino group in its side chain is not particularly restricted provided that it is a resin resulting from the polymerization of an amino group-containing polymerizable unsaturated monomer, thus including polyallylamines and polyvinylamines, among others.

The method of coupling an aldehyde group-containing compound to said side chain is not particularly restricted but includes, inter alia, the method which comprises dissolving the resin having an amino group in its side chain in water or an organic solvent, adding benzaldehyde dropwise to the resulting solution, and allowing the reaction to proceed at a reaction temperature of 50 to 70°C.

The side chain in the form of said azomethine group is preferably contained in a proportion of 0.01 to 1.5 moles in each 100 g of the resin. If it is less than 0.01 mol/100 g, the amount of aldehyde released in the formation of a coating film is so small that the above-mentioned effect of introducing a methine group will not be sufficiently expressed. Exceeding 1.5 mol/100 g is undesirable, for the film-forming properties of the resin will be adversely affected.

The specific polysaccharide that can be used as said polysaccharide according to the invention is not particularly restricted but includes, inter alia, alginic acid, chitosan, starch, pullulan, gum arabic, K-carrageenan, agar, xanthan gum, guar gum, ghatti gum, pectin, locust bean gum, and cellulose derivatives such as cellulose acetate, hydroxyethylcellulose, carboxyethylcellulose, hydroxypropylcellulose, and so on. These polysaccharides can be used each independently or in a combination of two or more species. It is advisable to use polysaccharides having number average molecular weights from 5000 to 1000000. If it is less than 5000, the film-forming properties tend to be poor. If it exceeds 1000000, dispersibility tends to be adversely affected or the coating viscosity tends to be increased so much as to adversely affect the coating workability and/or the physical properties of the film.

The above polysaccharides may have been crosslinked. The method of crosslinking a polysaccharide includes the bridge formatin by ester linkage, the crosslinking with a diisocyanate, an epoxy compound, or a polyfunctional aldehyde compound, and polyion complexing, among others.

The technology involving said formation of an ester linkage includes not only a chemical method of ester bonding but also a method utilizing the reverse reaction of the enzymatic reaction of an esterase or the like, for instance. In consideration of coating film properties such as film strength, the chemical method of ester bonding is preferred.

Referring, further, to the crosslinking of a polysaccharide, usually the crosslinking agent is formulated preferably in a proportion of 0.1 weight % to 30 weight % per 100 weight % of the polysaccharide. If the formulating level is less than 0.1 weight %, the crosslinking tends to be insufficient. If it exceeds 30 weight %, the gelation time tends to be so short that the coating operation is rendered difficult. The preferred lower limit is 0.5 weight % and the preferred upper limit is 20 weight %.

When the polysaccharide has an -NH₂ group as it is the case with chitosan, it may be reacted with said aldehyde group-containing compound to have the aldehyde linked in the form of an azomethine group or be modified by a Michael reaction. The above azomethine group forms as the -NH₂ group reacts with the aldehyde group. By providing the resin with this azomethine group, the water-solubility of resin can be decreased. Moreover, because the azomethine group is hydrolyzed in an weakly alkaline environment such as seawater to gradually solubilize the resin and the released aldehyde compound exhibits antifouling activity against attachment of aquatic life, the resin yields a coating film having an excellent antifouling performance. The aldehyde group-containing compound is not particularly restricted but includes the compounds named hereinbefore.

The acrylic resin for use in said resin composition comprising an acrylic resin and, as admixed therewith, an alkyl silicate is not particularly restricted but may for example be the resin prepared by polymerizing a monomeric material composed predominantly of an acrylic monomer, e.g. (meth)acrylic acid, ethyl (meth)acrylate, n-butyl (meth)acrylate, 2-ethylhexyl (meth)acrylate, 2-hydroxyethyl (meth)acrylate, 2-hydroxypropyl (meth)acrylate, 4-hydroxybutyl (meth)acrylate, or the like. The acrylic resin may be a copolymer prepared by using one or more polymerizable monomers in addition to said acrylic monomer.

The alkyl silicate for use in combination with said acrylic resin is a compound represented by the following general formula, inclusive of its condensation product. 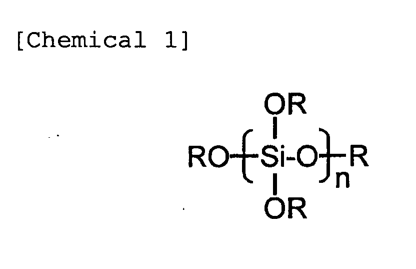 (wherein R groups are the same or different and each represents an alkyl group of 1 to 10 carbon atoms; n represents an integer of 1 to 20). Thus, for example, tetramethyl silicate, tetraethyl silicate, tetra-n-propyl silicate, and tetra-i-propyl silicate can be mentioned. The condensation product includes the compound obtainable by the condensation of such an alkyl silicate under hydrolyzing conditions. The condensate, if used, preferably has a condensation degree of 2 to 20. If the degree of condensation exceeds 20, the condensate tends to gain in viscosity to interfere with handling.

As the alkyl silicate mentioned above, commercial products such as MKC silicate MS-51 (R=methyl, mean of n=5), and MKC silicate MS-56 (R=methyl, mean of n=10) (both are products of Mitsubishi Chemical Corporation); ethyl silicate 40 (R=ethyl, mean of n=5) and ethyl silicate 48 (R=ethyl, mean of n=10) (both are products of Colcoat Co., Ltd.), among others, can be utilized.

These alkyl silicates may be used each independently or in a combination of two or more species. Furthermore, a resin composition comprising a blend of said resin with polyoxyethylene or polyethylene glycol, for instance, can also be used. In this case, said resin and polyoxyethylene or polyethylene glycol may be mix-dissolved in advance and a crosslinking agent be then added to the solution to give a three-dimensional structure. The molecular weight of the polyoxyethylene or polyethylene glycol for use in this case is preferably not less than 20000. If it is less than 20000, it dissolves in water so that the necessary performance will not be maintained for a sufficiently long time. The mixing ratio is 2 weight % ∼ 100 weight % based on 100 weight % of said resin. If it is less than 2 weight %, the effect of addition will not be sufficient. If it exceeds 100 weight %, film-forming properties are lost so that a long-term maintenance of performance cannot be expected.

The coating composition for constructing the coating film of the invention is preferably formulated to contain the above polymer component in a proportion of 15 to 100 weight %. The above-mentioned resins may be used each independently or in a combination of two or more species. In the case where said resin composition is to be crosslinked, there may be used the method in which the crosslinked resin is formulated into the coating composition or the method in which the crosslinking agent is formulated in a coating composition and the curing reaction is carried out in the film-forming stage. Optionally these two methods may be used in combination.

In the above coating composition, a pigment may be formulated. However, since formulation of a pigment tends to increase the surface roughness, the formulating amount should be confined within the range where the surface roughness to be described hereinafter may be maintained at 40 µm or less.

In the coating composition containing said polymer, there may be incorporated such known additives as the plasticizer, thickener, rheology modifier, filler, dispersant, ultraviolet absorber, light stabilizer, antioxidant, antifreezing agent, anti-algal agent, antiseptic, defoaming agent, etc. as needed and, if desired, rosin, hydrogenated rosin, esters thereof, chlorinated paraffin, polyvinyl ethers, and esters of polybasic acids such as phthalic acid, fumaric acid, maleic acid, phosphoric acid, etc. can also be formulated.

Depending on the intended use, the coating composition may contain an antifoulant. In the case where the resultant coating film is disposed in contact with an aqueous liquid, the formulated antifoulant gradually dissolves out onto the coating film to exhibit an antifouling effect. The aqueous liquid mentioned above means a water-containing liquid.

The antifoulant mentioned above is not particularly restricted but includes substances which are in routine use as antifouling agents. Thus, for example, zinc methylthiocarbamate, 2-methylthio-4-t-butylamino-6-cyclopropylamino-s-triazine, 2,4,5,6-tetrachloroisophthalonitrile, N,N'-dimethyldichlorophenylurea, copper rhodanide, copper suboxide, 4,5-dichloro-2-n-octyl-3-(2H)isothiazoline, N-(fluorodichloromethylthio)phthalimide, N,N'-dimethyl-N'-phenyl-(N-fluorodichloromethylthio)sulfamide, pyridinetriphenylborane, laurylamine-triphenylborane, zinc 2-pyridinethiol-1-oxide, copper 2-pyridinethiol-1-oxide, 2,4,5,6-tetrachloro-4-(methylsulfonyl)pyridine, 3-iodo-2-propynylbutyl carbamate, diiodomethyl-p-tolylsulfone, etc. can be mentioned. These may be used each independently or in a combination of two or more species.

In the case where said antifoulant is incorporated in the coating composition according to the invention, its proportion is preferably 5 to 120 weight parts relative to 100 weight parts of the total polymer, though it may vary with different uses. If it is less than 5 weight parts, the antifouling effect attributable to addition of the antifoulant may not be sufficiently expressed. If it exceeds 120 weight parts, no adequate film-forming properties may be obtained but cracks and other defects tend to develop.

It is necessary that the water contact angle of the coating film of the invention lie within the range of 0° to 40°. The contact angle is the angle including the body of a liquid between the line tangential to the surface of the liquid as constructed from the point of contact of the liquid, the surface of a solid, and a gas or vapor phase. When the contact angle exceeds 40°, the reduction of friction is not sufficient so that the object of the invention cannot be accomplished. When the contact angle exceeds 30°, the friction-reducing effect is not stable so that a sufficient reduction of friction may not be obtained depending on the conditions of use and the intended application. In order to insure a stable friction-reducing effect, the contact angle is preferably not greater than 20°. The more preferred contact angle is not greater than 15°.

The coating film according to the invention preferably has a surface roughness of not more than 40 µm. As used in this specification, the term "surface roughness" means the roughness measured with a non-contacting laser beam surface roughness meter. When this surface roughness exceeds 40 µm, the friction with water cannot be sufficiently reduced. The more preferred surface roughness is not greater than 30 µm and the still more preferred surfface roughness is not greater than 25 µm.

The coating film of the invention is constructed by coating a substrate surface with the above coating composition and drying the coat. The dry thickness of the coating film to be so constructed can be judiciously selected according to the intended use and may for example be 50 to 500 µm. The surface roughness of the coating film is influenced by the surface condition of the substrate, and when a substrate having a large surface roughness is to be coated, it is necessary to increase the thickness of the coating film so as to control the surface roughness of the film to 40 µm or less.

In the case where a friction with an aqueous liquid occurs as, for example, the coated article is moved in water, the surface of the coating film of the invention shows a reduced frictional resistance. By reducing the frictional resistance, the energy required for movement of the coated article in the aqueous liquid can be diminished.

The substrate on which the coating film of the invention is to be constructed is not particularly restricted but the present invention can be applied with advantage to substrate surfaces to be exposed to aqueous liquids such as water, for example piping systems and other structures. The piping systems mentioned just above are pipelines, cooling pipes and water conduits for manufacturing plants and power plants, refrigerant lines for air conditioners, and so forth. Usually, the coating film is constructed on the internal walls of such piping systems. The other structures mentioned above include, inter alia, ship bottoms and offshore structures.

In constructing the coating film from a coating composition, the coating method that can be used is not particularly restricted but includes the hitherto-known techniques such as spray coating, coating with a roll coater, brush coating, and dipping. The method of drying the coat is not particularly restricted but in typical cases, the coated article is allowed to stand at room temperature for 1 hour to 10 days. If necessary, heating or energy-beam irradiation may be carried out.

The coating film thus constructed generates only a reduced surface friction so that the resistance between water and the coated article is attenuated. Therefore, when it is applied as a bottom coating, the resistance occurring between the ship hull and water is reduced and, hence, the fuel cost for navigation is decreased.

In addition, by forming the coating film on the exposed surfaces of pipelines and conduits, the efficiency of liquid transportation can be improved.

The coating film of the present invention, constituted as described above, has an excellent friction-reducing effect in water so that it contributes to a decreased ship fuel cost and an increased efficiency of liquid transportation.

### [Examples]

The following examples illustrate the present invention in further detail without defining the scope of the invention. It should be noticed that, as used in the following description, % means weight % unless otherwise specified.

### Resin Production Example 1

A four-necked flask equipped with a nitrogen gas inlet pipe and a stirrer was charged with 45 g of xylene and 50 g of methyl isobutyl ketone and the mixutire was heated at 100°C. To this solution, 20 g of methyl methacrylate, 15 g of 2-hydroxyethyl methacrylate, and 65 g of methylpoly(oxyethylene) methacrylate (average degree of polymerization = 9) as polymerizable monomers and a mixture of 1.5 g of t-butyl 2-ethylhexanoate and 5 g of xylene as an initiator were added dropwise over 30 minutes. After completion of dropwise addition, a mixture of 0.3 g of t-butyl 2-ethylhexanoate and 5 g of xylene was added dropwise over 30 minutes and the mixture was further incubated for 2 hours to prepare a resin solution A.

### Resin Production Example 2

Except that 15 g of methyl methacrylate, 15 g of 2-hydroxyethyl methacrylate, and 70 g of methylpoly(oxyethylene) methacrylate (average degree of polymerization = 24) were used as polymerizable monomers, the procedure of Resin Production Example 1 was repeated to prepare a resin solution B.

### Resin Production Example 3

Using the same equipment as used in Resin Production Example 1, 500 g of 20% aqueous solution of polyallylamine, 100 g of dimethylformamide, and 20 g of lauraldehyde were added and the mixture was heated at 80°C for 3 hours to prepare a resin solution C.

### Resin Production Example 4

Using the same equipment as used in Resin Production Example 1, 500 g of 20% aqueous solution of polyallylamine, 100 g of dimethylformamide, and 12 g of benzaldehyde were added and the mixture was heated at 80°C for 3 hours to prepare a resin solution D.

### Resin Production Example 5

Using the same equipment as used in Resin Production Example 1, 500 g of 10% aqueous solution of chitosan, 100 g of dimethylformamide, and 8 g of lauraldehyde were added and the mixture was heated at 80°C for 3 hours to prepare a resin solution E.

### Resin Production Example 6

Using the same equipment as used in Resin Production Example 1, 500 g of 10% aqueous solution of chitosan, 100 g of dimethylformamide, and 7 g of lauryl acrylate were added and the mixture was heated at 80°C for 4 hours to prepare a resin solution F.

### Resin Production Example 7

Using the same equipment as used in Resin Production Example 1, 500 g of 10% aqueous solution of chitosan, 100 g of dimethylformamide, and 4 g of glycidyl phenyl ether were added and the mixture was heated at 80°C for 3 hours to prepare a resin solution G.

### Resin Production Example 8

Using the same equipment as used in Resin Production Example 1, 500 g of 5% aqueous solution of alginic acid, 100 g of dimethylformamide, 3 g of glycidyl phenyl ether, and 0.5 g of diethylaminoalcohol were added and the mixture was heated at 80°C for 3 hours to prepare a resin solution H.

### Resin Production Example 9

A four-necked flask equipped with a nitrogen gas inlet pipe and a stirrer was charged with 50 g of xylene and 40 g of n-butanol and the mixture was heated to 100°C. To this solution, a mixture of 50 g of methyl methacrylate, 50 g of 2-hydroxyethyl methacrylate as polymerizable monomers , and, 1.5 g of t-butyl 2-ethylhexanoate as initiator was added dropwise over 3 hours. After completion of dropwise addition, a mixture solution of 0.3 g of t-butyl 2-ethylhexanoate and 5 g of xylene was added dropwise over 30 minutes and the mixture was further incubated for 2 hours to prepare a resin solution I.

### Resin Production Example 10

Except that 75 g of methyl methacrylate and 25 g of methylpoly(oxyethylene) methacrylate (average degree of polymerization = 9) were used as polymerizable monomers, the procedure of Resin Production Example 1 was repeated to prepare a resin solution J.

### Resin Production Example 11

Except that 35 g of methyl methacrylate and 65 g of 2-ethylhexyl methacrylate were used as polymerizable monomers, the procedure of Resin Production Example 1 was repeated to prepare a resin solution K.

### Resin Production Example 12

Using the same equipment as used in Resin Production Example 1, 500 g of 20% aqueous solution of polyallylamine, 100 g of dimethylformamide, and 48 g methylpoly(oxyethyl) acrylate (average degree of polymerization = 24) were added and the mixture was heated at 80°C for 3 hours to prepare a resin solution L.

### Resin Production Example 13

Using the same equipment as used in Resin Production Example 1, 550 g of 10% aqueous solution of chitosan, 150 g of dimethylformamide, 0.5 g of lithium hydroxide, and 10 g of methylpoly(oxyethyl) acrylate (average degree of polymerization = 24) were added and the system was refluxed for 3 hours with a total of 100 cc of the solvent being constantly removed to prepare a resin solution M.

### Example 1

One-hundred (100) grams of resin solution A, 15 g of 20% solution of hexamethylene diisocyanate in xylene, and 1 g of diethylaminoethanol were mixed well and coated onto a test drum (made of vinyl chloride resin, Dia. 300 mm, H. 300 mm).

### Example 2

One-hundred (100) grams of resin solution B, 15 g of 20% solution of hexamethylene diisocyanate in xylene, and 1 g of diethylaminoethanol were mixed well and coated onto a test drum.

### Example 3

One-hundred (100) grams of resin solution C and 10 g of 5% aqueous solution of glutaraldehyde were mixed well and coated onto a test drum.

### Example 4

One-hundred (100) grams of resin solution D and 12 g of 5% aqueous solution of glutaraldehyde were mixed well and coated onto a test drum.

### Example 5

One-hundred (100) grams of resin solution E and 7 g of 5% aqueous solution of glutaraldehyde were mixed well and coated onto a test drum.

### Example 6

One-hundred (100) grams of resin solution F and 7 g of 5% aqueous solution of glutaraldehyde were mixed well and coated onto a test drum.

### Example 7

One-hundred (100) grams of resin solution G and 9 g of 5% aqueous solution of glutaraldehyde were mixed well and coated onto a test drum.

### Example 8

One-hundred (100) grams of resin solution H and 4 g of 50% aqueous solution of glycerol diglycidyl ether (Na-gase Kasei Kogyo; Denacol EX-313) were mixed well and coated onto a test drum.

### Example 9

Resin solution J was coated onto a test drum.

### Example 10

One hundred (100) grams of resin solution K and 15 g of ethyl silicate were thoroughly blended and the resulting dispersion was coated on a test drum.

### Example 11

One hundred (100) grams of resin solution H, 35 g of 10% aqueous solution of chitosan, and 4 g of 5% aqueous solution of glutaraldehyde were mixed well and coated onto a test drum.

### Example 12

One hundred (100) grams of resin solution D, 70 g of 5% aqueous solution of polyethylene oxide (n=5000), and 7 g of 50% aqueous solution of glycerol polyglycidyl ether were mixed well and coated onto a test drum.

### Example 13

One hundred (100) grams of resin solution A, 5 g of colloidal silica, 10 g of titanium dioxide, and 2 g of phthalocyanine blue were blended to give a dispersion and following addition of 10 g of 20% solution of hexamethylene diisocyanate in xylene and 1 g of diethylaminoethanol, the whole was mixed well and coated onto a test drum.

### Example 14

One hundred (100) grams of resin solution B, 3 g of colloidal silica, 10 g of titanium dioxide, and 10 g of pyrithione zinc were blended to give a dispersion, and following addition of 15 g of 20% solution of hexamethylene diisocyanate in xylene and 1 g of diethylaminoethanol, the whole was mixed well and coated onto a test drum.

### Example 15

One hundred (100) grams of resin solution B, 3 g of colloidal silica, 10 g of titanium dioxide, and 15 g of copper suboxide were blended to give a dispersion, and following addition of 15 g of 20% solution of hexamethylene diisocyanate in xylene and 1 g of diethylaminoethanol, the whole was mixed well and coated onto a test drum.

### Example 16

One-hundred (100) grams of 10% aqueous solution of chitosan (acetic acid added), 15 g of 5% aqueous solution of glutaraldehyde, and 75 g of 5% aqueous soluiton of polyethylene glycol (n=7000) were mixed well and coated onto a test drum.

### Example 17

One-hundred (100) grams of resin solution M and 8 g of 5% aqueous solution of glutaraldehyde were mixed well and coated onto a test drum.

### Example 18

One-hundred (100) grams of resin solution L and 8 g of 5% aqueous solution of glutaraldehyde were mixed well and coated onto a test drum.

### Example 19

To 100 g of resin solution H were added 80 g of 5% aqueous solution of polyethylene oxide (n=5000) and 80 g of bis(polyoxyethylene (n=4) terephthal)carbodiimide, and the whole was mixed well and coated onto a test drum.

### Example 20

Thirty-five (35) grams of 10% aqueous solution of alginic acid was blended with 10 g of 5% aqueous solution of ammonia, 12 g of 5% aqueous solution of polyethylene glycol (n=10000), 2 g of phthalocyanine blue, 3 g of titanium dioxide, 2g of pyrithione zinc, and 3 g of pyridinetriphenylborane. To this dispersion was added 25 g of bis(polyoxyethylene (n=4) terephthal) carbodiimide, and the whole was mixed well and coated onto a test drum.

### Comparative Example 1

A test drum mirror-finished by buffing (surface roughness 2 µm) was used as Comparative Example 1.

### Comparative Example 2

A test drum finished to a surface roughness of 15 µm was used as Comparative Example 2.

### Comparative Example 3

A test drum finished to a surface roughness of 55 µm was used as Comparative Example 3.

### Comparative Example 4

Resin Solution I was coated onto a test drum.

### Comparative Example 5

Resin Solution K was coated onto a test drum.

Using each sample, the contact angle, surface roughness, and frictional resistance were measured. The measurement methods were as follows.

### [Contact angle]

The water contact angle of each coating film was measured. The smaller this value is, the more readily wetted is the surface. The water contact angle was measured with a Kyowa contact angle goniometer (Kyowa Scientific).

### [Surface roughness]

Using a non-contacting laser beam surface roughness meter, the surface condition of each coating film was evaluated.

### [Frictional resistance test]

The coated test drums prepared by the above preparation method were respectively immersed in seawater for 7 days and using a rotating drum test apparatus filled with seawater (25±2°C), the torque acting on the drum shaft was measured at each of the rotational speeds of 300 rpm, 350 rpm, and 400 rpm. As controls, similar measurements were also made with the test drum mirror-finished by buffing (surface roughness 2 µm) (Comparative Example 3) and the test drum finished to a surface roughness of 15 µm (Comparative Example 4).

The measurement data for the Examples are presented in Table 1 and the measurement data for the Comparative Examples are presented in Table 2.

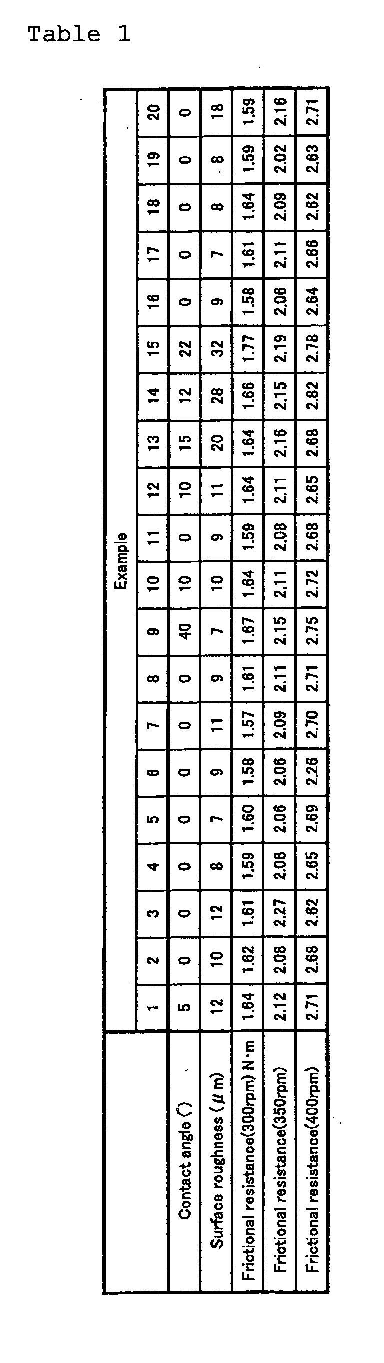

**Table 2**

| | Comparative Example | | | | |
|---|---|---|---|---|---|
| | 1 | 2 | 3 | 4 | 5 |
| Contact angle (°) | - | - | - | 58 | 65 |
| Surface roughness (µm) | 2 | 9 | 55 | 11 | 9 |
| Frictional resistance(300rpm) N·m | 1.65 | 1.85 | 2.35 | 1.67 | 1.68 |
| Frictional resistance(350rpm) | 2.16 | 2.89 | 4.12 | 2.21 | 2.22 |
| Frictional resistanca(400rpm) | 2.75 | 3.15 | 5.69 | 2.78 | 2.78 |

It will be apparent from Tables 1 and 2 that the surfaces with water contact angles not larger than 40° gave invariably lower frictional resistance values than the mirror-finished ideal smooth surface (water contact angle 55°) according to Comparative Example 1. The test drum of Comparative Example 2, which was made of the same material but having a surface roughness of the same order as the Examples, had an increased frictional resistance as compared with the test drum of Comparative Example 1. This tendency was also found in Comparative Examples 4 and 5.

## Claims

1. A low friction resistance coating film in water
of which surface has a water contact angle of 0 to 40°.

2. The low friction resistance coating film in water according to Claim 1
wherein the coating film has a surface roughness of not more than 40 µm.

3. A method of reducing the friction on a substrate in water
wherein a coating film having a surface with a water contact angle of 0 to 40° is constructed on the substrate surface.

4. The method of reducing the friction on a substrate in water according to Claim 3
wherein the coating film has a surface roughness of not more than 40 µm.
